# EUROPÄISCHE PATENTSCHRIFT

(11) **EP 1 866 198 B1**
(45) Veröffentlichungstag und Bekanntmachung des Hinweises auf die Patenterteilung: **29.02.2012**
(21) Anmeldenummer: 06722706.6
(22) Anmeldetag: 29.03.2006
(51) Int. Cl.: B62K 21/26, B62J 33/00

(54) **HANDGRIFF MIT HEIZEINRICHTUNG**
HANDLE COMPRISING A HEATING SYSTEM
POIGNEE A DISPOSITIF CHAUFFANT

(30) Priorität: 29.03.2005 DE 102005014682
(43) Veröffentlichungstag der Anmeldung: 19.12.2007
(73) Patentinhaber: Brehmer, Thomas, 51674 Wiehl (DE)
(72) Erfinder: Brehmer, Thomas, 51674 Wiehl (DE)
(74) Vertreter: Jungen, Rolf
(86) Internationale Anmeldenummer: PCT/DE2006/000554
(87) Internationale Veröffentlichungsnummer: WO 2006/102877

(56) Entgegenhaltungen:
- EP-A- 0 857 643
- EP-A- 1 555 198
- WO-A-2005/068282
- DE-A1- 10 048 181
- DE-A1- 19 525 748
- DE-A1- 19 526 029
- DE-U1- 8 313 975

## Beschreibung

Die Erfindung betrifft einen Handgriff mit einer Heizeinrichtung für Fahrzeuge wie Motorräder, Motorschlitten und dergleichen, umfassend ein hohlzylinderartiges Innenteil, eine außen zur äußeren Umfangsfläche des Innenteils angeordnete Heizeinrichtung mit einem Träger und wenigstens einer Widerstandsbahn, sowie ein radial außen angeordnetes angegossenes oder angespritztes Verkleidungselement.

Ein solcher Handgriff ist in der deutschen Offenlegungsschrift DE 195 25 748 A1 offenbart. Bei der Montage wird der Handgriff auf ein Griffrohr des Fahrzeuges aufgeschoben und die Heizeinrichtung an eine Versorgungsschaltung angeschlossen. Zur Herstellung eines herkömmlichen Handgriffs wird zunächst die Heizeinrichtung um das Innenteil gewickelt und anschließend darüber eine Rohgummischicht gewickelt um die Heizeinrichtung vorläufig zu befestigen. Nach der Einführung in eine Gießform wird geschmolzener Gummi eingespritzt, wobei die Rohgummischicht, welche die Heizeinrichtung vorläufig festhält durch die Wärme schmilzt. Die Heizeinrichtung wird auf diese Weise vergossen, wobei der ausgehärtete Gummi das Verkleidungselement bildet. Um sicherzustellen, dass sich die als flexible Leiterplatte ausgebildete Heizeinrichtung ohne Knitterstellen um die äußere Umfangsfläche des Innenteils erstreckt, ist bei dem herkömmlichen Handgriff ferner vorgesehen, dass das Verkleidungselement derart in eine Form gegossen wird, dass ein Umfangsbereich des Innenteils, an dem die Heizeinrichtung nicht vorhanden ist, einem Trennbereich einer Gießform, mit der das Verkleidungselement hergestellt wird, zugewandt ist.

Die Offenlegungsschrift EP 0857643 A1 betrifft einen gattungsgemäßen Handgriff mit einer Heizeinrichtung für Fahrzeuge mit einem hohlzylindrischen Innenteil, einer außen zum Außenmantel des Innenteils angeordnete Heizeinrichtung mit einem Folienträger, welcher Leiterbahnen trägt sowie ein radial außen angeordnetes, angegossenes Verkleidungselement, wobei die Heizeinrichtung direkt mit dem Innenteil verbunden ist.

Die Herstellung eines solchen gattungsgemäßen Handgriffs erweist sich jedoch als sehr kostenintensiv, da er nur mit einem hohen Arbeitsaufwand reproduzierbar hergestellt werden kann. Für eine kostengünstige Herstellung mit hohen Stückzahlen ist ein solcher Handgriff kaum geeignet. Darüber hinaus sind herkömmliche Handgriffe empfindlich beim Auftreten von Missbrauchskräften.

Insofern besteht die Aufgabe der Erfindung darin, den gattungsgemäßen Handgriff in Bezug auf eine zuverlässige, reproduzierbare und kostengünstige Herstellung sowie in Bezug auf seine Funktionalität weiterzubilden.

Diese Aufgabe löst die Erfindung auf überraschend einfache Weise schon durch die Bereitstellung eines Handgriffs mit den Merkmalen von Anspruch 1 sowie einem Verfahren zur Herstellung eines Handgriffs mit den Merkmalen von Anspruch 15. Dabei weist der erfindungsgemäße Handgriff ein hohlzylinderartiges Innenteil, eine radial außen zum Außenmantel des Innenteils angeordnete Heizeinrichtung mit einem Träger und wenigstens einer Widerstandsbahn sowie ein radial außen angeordnetes, angegossenes oder angespritztes Verkleidungselement auf, wobei die Heizeinrichtung direkt mit dem Innenteil verbunden ist. Der erfindungsgemäße Handgriff zeichnet sich dadurch aus, der Träger um das Innenteil herum gewickelt ist, wobei dessen beiden Längskanten in Längsrichtung verzahnt sind, und wobei das Innenteil an der Außenmantelfläche zumindest einen radial nach außen weisenden, sich umfänglich erstreckenden Steg und/oder zumindest eine sich umfänglich erstreckende Nut aufweist.

Der Begriff "direkt verbunden" bedeutet dabei, dass die Heizeinrichtung an dem Innenteil so befestigt ist, dass die Verbindung zwischen den beiden Teilen auch bewirkt ist, wenn das Verkleidungselement abgenommen ist. Eine solche direkte Verbindung kann beispielsweise durch Kleben oder Vernieten von Innenteil und Heizeinrichtung erreicht werden. Dabei umfasst die Bezeichnung "eine radial außen zum Außenmantel oder außen zur äußeren Umfangsfläche des Innenteils angeordnete Heizeinrichtung" auch Gestaltungen, bei welchen die Heizeinrichtung nicht auf Kontakt zum Innenteil angeordnet ist, sondern beispielsweise zwischen Innenteil und Heizeinrichtung eine doppelseitige Klebefolie zur gegenseitigen Befestigung von Heizeinrichtung und Innenteil oder eine Schicht aus einem Material zur Beeinflussung der Wärmeleitung zwischen Innenteil und Heizeinrichtung angeordnet ist. Wesentlich ist, dass Innenteil und Heizeinrichtung miteinander verbunden sind, ohne dass es hierfür des Verkleidungselementes bedarf.

Vorteilhaft ist der Träger der Heizeinrichtung, insbesondere ausgebildet als flexible Leiterplatte, um das Innenteil herum gewickelt, wobei dessen Kanten in Längsrichtung miteinander verzahnt sind. Diese Gestaltung des Trägers ermöglicht auch, dass die Befestigung der Heizeinrichtung an dem Innenteil entlang einer Längslinie auf der äußeren Mantelfläche des Innenteils durchgeführt werden kann, was die Anbringung des Trägers an dem Innenteil erleichtert. Zur Aufnahme von Missbrauchskräften in axialer Richtung, die beispielsweise beim Aufstellen eines gefallenen Motorrades auftreten können, umfasst das Innenteil an seiner äußeren Mantelfläche zumindest einen radial nach außen weisenden, sich umfänglich erstreckenden Steg. Besonders vorteilhaft verläuft der Steg an einem festen Längsort des Innenteils, sodass dieser Steg richtungsoptimiert eine in axialer Richtung auftretende Kraft auf das Verkleidungselement aufnehmen kann. Statt eines Steges kann das Innenteil an seiner äußeren Manteloberfläche auch eine radial nach innen weisende Ausnehmung, d.h. eine Nut aufweisen. Durch das Zusammenwirken der Nut mit dem in die Nut eingespritzten Verkleidungselement sind in gleicher Weise auf das Verkleidungselement auftretende Kräfte durch das Innenteil aufnehmbar.

Durch die angegebenen konstruktiven Maßnahmen wird erreicht, dass sich einerseits der Herstellungsprozess stark vereinfacht, da keine besonderen Vorkehrungen getroffen werden müssen um zu verhindern, dass die Heizeinrichtung beim Gießvorgang zerknittert wird oder sich vom Innenteil löst und darüber hinaus kann mit dem erfindungsgemäßen Handgriff eine besonders gute Funktion bereitgestellt werden.

Es ist zweckmäßig, wenn die Heizeinrichtung, welche insbesondere als flexible Leiterplatte ausgebildet sein kann, das Innenteil im Wesentlichen voll umfänglich umschließt. Hierdurch kann eine symmetrische Abgabe von Heizenergie über den gesamten Umfang des Griffs bereitgestellt werden im Unterschied zu dem herkömmlichen Handgriff, bei welchem die Heizeinrichtung weniger als den vollen Umfang des Innenteils abdeckt.

Es ist zweckmäßig, wenn die radial innen liegende Manteloberfläche des Innenteils, d.h. die innere Umfangsfläche des Innenteils im Bereich der Längserstreckung der Heizeinrichtung frei von Material des Verkleidungselementes ist. Durch diese Maßnahme wird erreicht, dass das Griffrohr des Fahrzeuges, auf welches der erfindungsgemäße Handgriff aufgeschoben wird, nicht in Kontakt mit Material des Verkleidungselementes kommt, was andernfalls eine relative Verdrehung des Handgriffs zum Griffrohr aufgrund der erhöhten Reibung zwischen dem Griffrohr und dem Handgriff behindern würde. Insofern ist dieses Gestaltungsmerkmal besonders für die Bereitstellung eines beheizbaren Handgriffs wie eines Gasgriffs vorteilhaft, über den die Beschleunigung des Fahrzeuges eingestellt wird. Im genannten Bereich weist die Mantelfläche des Innenteils vorteilhafterweise keine radialen Durchgangsöffnungen auf.

Um sicherzustellen, dass sich insbesondere bei einem Gasgriff die Heizeinrichtung bei der Betätigung des Griffs nicht relativ zum Innenteil verschiebt, kann vorgesehen sein, dass sich das Innenteil mit der Heizeinrichtung um die Längsachse des Handgriffs drehstarr in einem Formschluss befindet. In bestimmten erfindungsgemäßen Ausführungsformen kann jedoch auch schon eine kraftschlüssige Verbindung zwischen Innenteil und Heizeinrichtung, wie z.B. durch Kleben erzeugbar, ausreichen.

Eine einfache und sichere Befestigung der Heizeinrichtung mit dem Innenteil kann dadurch bereitgestellt werden, indem der Träger Löcher aufweist, in welche korrespondierende, integral mit dem Innenteil ausgebildete Vorsprünge oder Zapfen eingreifen. Diese Löcher können grundsätzlich überall auf dem Träger bzw. der Leiterplatte angeordnet sein, wobei es jedoch zur Gestaltung einer homogenen Flächen-Heizeinrichtung vorteilhaft ist, wenn diese Löcher im Bereich von Kanten des Trägers angeordnet sind, da sich hierdurch die Anordnung der Widerstandsbahn auf dem Träger vereinfacht. Die Vorsprünge auf dem Innenteil sind korrespondierend zu den Löchern im Träger angeordnet. Eine besonders zweckmäßige Gestaltung ergibt sich, wenn diese Vorsprünge auf der äußeren Mantelfläche des Innenteils auf einer Geraden verlaufen, die parallel zur Achse ausgerichtet ist. Hierdurch vereinfacht sich die Herstellung des Innenteils als auch die Arbeitsschritte für das Verbinden von Innenteil und Heizeinrichtung.

Um die Heizeinrichtung mit dem Innenteil nicht nur gegen eine relative Verdrehung zu sichern, sondern auch gegen eine relative Bewegung zueinander in radialer Richtung, kann darüber hinaus vorgesehen sein, dass sich die an der äußeren Umfangsfläche des Innenteils ausgebildeten Vorsprünge über die Heizeinrichtung hinaus erstrecken, wobei die Vorsprünge an ihren Enden jeweils eine Ausdehnung in Umfangsrichtung aufweisen, welche den Rand des korrespondierenden Loches des Trägers der Heizeinrichtung zumindest abschnittsweise überragt. Demnach übergreift das radiale Ende des Vorsprungs den Rand des korrespondierenden Lochs, sodass eine Trennung von Träger und Innenteil in radialer Richtung verhindert ist. Je nach verwendetem Material für das Innenteil kann diese Übergreifung der Vorsprünge über den Rand des korrespondierenden Loches beispielsweise durch eine rein mechanische Verformung des Vorsprungs an seinem radialen Ende oder durch eine Verformung unter Wärmezufuhr erreicht werden.

Die erfindungsgemäße direkte Verbindung der Heizeinrichtung mit dem Innenteil weist sowohl für den Herstellungsprozess des erfindungsgemäßen Handgriffs Vorteile auf als auch bei der Verwendung des fertig gestellten Handgriffs, da somit vermieden wird, dass eine Relativbewegung zwischen Heizeinrichtung und Innenteil auftritt.

Um eine Verdrehung des Verkleidungselementes zum Innenteil auch bei hoher Kraftaufwendung zu vermeiden, kann vorgesehen sein, dass das Innenteil an seiner äußeren Mantelfläche Ausnehmungen oder Stege aufweist, welche jeweils korrespondierend mit einem Loch wie einem schlitzartigen Loch in dem Träger der Heizeinrichtung angeordnet sind, sodass Kräfte in tangentialer Richtung vom Verkleidungselement auf das Innenteil übertragbar sind. Darüber hinaus können natürlich auch solche Ausnehmungen an der äußeren Mantelfläche des Innenteils in Bereichen des Innenteils vorgesehen sein, an welchen die Heizeinrichtung nicht anliegt.

In einer besonderen Ausführungsform kann das Innenteil an seiner äußeren Mantelfläche zwei radial nach außen weisende, sich umfänglich erstreckenden Stege oder Nuten umfänglich beabstandet und am gleichen Längsort aufweisen, sodass eine auftretende Missbrauchskraft in axialer Richtung über einen großen Umfangsbereich aufgenommen werden kann und gleichzeitig aufgrund der Beabstandung der Stege sichergestellt ist, dass beim Einspritzvorgang das Material des Verkleidungselementes kein Bereich der äußeren Oberfläche des Innenteils abgeschattet ist.

Um zu erreichen, dass ein Großteil der Heizenergie radial nach außen in das Verkleidungselement geführt wird und nicht nach innen in das Griffrohr, kann vorgesehen sein, dass die innere Mantelfläche des Innenteils nicht ideal zylinderförmig aufgebaut ist, sondern Ausnehmungen aufweist zur Verminderung der Kontaktfläche mit dem Griffrohr. Beispielsweise kann es zweckmäßig sein, wenn an der inneren Mantelfläche des Innenteils längs verlaufende und sich radial nach innen erstreckende Rippen angeordnet sind. Um die Herstellung des Innenteils zu erleichtern, kann vorgesehen sein, dass die Rippen und die in Umfangsrichtung benachbarten Vertiefungen parallel zur Längsachse des Innenteils verlaufen. Zur Vermeidung eines erhöhten Reibwiderstandes zwischen dem Griffrohr und dem Innenteil ist es zweckmäßig, wenn zumindest im Bereich der nach innen vorstehenden Rippen, welche auf dem Griffrohr aufliegen, kein Material des Verkleidungselementes angeordnet ist. Je nach verwendetem Material für das Innenteil und je nach Durchmesser des Innenteils kann eine Anordnung von auf dem Umfang äquidistant beabstandete vier bis zehn Rippen zweckmäßig sein, die parallel zur Längsachse des Innenteils verlaufen.

Es kann zweckmäßig sein, wenn sich integral an einem Längsende des Innenteils ein im wesentlichen ebener Fortsatz erstreckt. Dieser Fortsatz kann insbesondere zur Führung einer Anschlusseinrichtung für die Kontaktierung der Heizeinrichtung mit einer Betriebsversorgung dienen. Darüber hinaus kann dieser ebene Fortsatz Befestigungsmittel wie Löcher aufweisen, mittels derer Bedienelemente des Fahrzeugs an dem Fortsatz anbringbar sind. Es kann vorteilhaft sein, wenn die Heizeinrichtung elektrisch mit einer Anschlusseinrichtung verbunden ist, welche integral mit dem Träger ausgebildet ist. Dabei kann die Anschlusseinrichtung zumindest einen Abschnitt des Trägers mit einer Leiterbahn umfassen, die an die zumindest eine Widerstandsbahn angeschlossen ist, wobei an dem der Heizeinrichtung abgewandten Ende der Leiterbahn eine Steckereinrichtung angeordnet sein kann. Insofern ist die Kontaktierung des erfindungsgemäßen Handgriffs einfach durch Herstellen einer entsprechenden Steckerverbindung zwischen der Anschlusseinrichtung und einer Versorgungseinrichtung des Versorgungsnetzes des Fahrzeugs realisierbar. Darüber hinaus kann auch vorgesehen sein, dass der erfindungsgemäße Handgriff andere elektrische Bauelemente und ein Anschlussmittel aufweist, mit welchen diese an einen Datenbus anschließbar ist. Beispielsweise kann die flexible Leiterplatte über eine solche Busankopplung mit der Zentralsteuerung des Fahrzeugs verbunden sein.

Es kann vorteilhaft sein, wenn der erfindungsgemäße Handgriff eine Steuereinrichtung aufweist, insbesondere eine integral auf der flexiblen Leiterplatte angebrachte Steuereinrichtung zur Steuerung der von der Heizeinrichtung abgegebenen Heizleistung.

Darüber hinaus kann es zweckmäßig sein, wenn ein Temperatursensor am Handgriff umfasst ist, welcher die Momentantemperatur aufnimmt und ggf. an die auch integrierte Steuereinrichtung weitergibt, welche dann abhängig von der gemessenen Temperatur die Heizleistung verändert. Dieser Temperatursensor kann auf dem Träger der Heizeinrichtung angeordnet sein, jedoch auch direkt in dem Verkleidungselement zur Erfassung der Temperatur, welche vom Nutzer auch wahrgenommen wird, wenn dieser das Verkleidungselement, d.h. den Handgriff umgreift.

Bei der Gestaltung der Widerstandsbahn auf dem Träger, welche zusammen die flexible Leiterplatte bilden, sind eine Vielzahl von Leiterbahnführungen möglich. Beispielsweise kann die Heizeinrichtung eine einzelne Widerstandsbahn aufweisen, die sich mäanderförmig im Wesentlichen über die gesamte Fläche des Trägers erstreckt. Verlaufen diese Mäanderarme im Wesentlichen parallel zur Längsachse des Handgriffs, kann eine Kontaktstelle an einer Längskante der Widerstandseinrichtung angeordnet sein und die andere Kontaktstelle an der gegenüberliegenden Längskante, sodass beide Kontaktstellen benachbart zueinander liegen, was den Anschluss einer elektrischen Versorgung erleichtert.

Verfahrensseitig löst die Erfindung die oben genannte Aufgabe mit einem Verfahren zur Herstellung eines Handgriffs mit einer Heizeinrichtung mit den Schritten:
a) Bereitstellen eines hohlzylinderartigen Innenteils, wobei das Innenteil an der Außenmantelfläche zumindest einen radial nach außen weisenden, sich umfänglich erstreckenden Steg und/oder zumindest eine sich umfänglich erstreckende Nut aufweist,
b) Bereitstellen einer Heizfolie mit in Längsrichtung verzahnten Längskanten,
c) Befestigen der Heizfolie an der äußeren Manteloberfläche des Innenteils, wobei die Heizfolie um das Innenteil herum gewickelt wird, derart, dass die beiden in Längsrichtung verzahnten Längskanten ineinandergreifen,
d) Einbringen des Innenteils mit daran befestigter Heizfolie in eine Spritzgießform und
e) Umspritzen des Innenteils mit daran befestigter Heizfolie.

Aufgrund der Maßnahme der direkten Befestigung der Heizfolie an der äußeren Manteloberfläche des Innenteils ist es nicht notwendig, zusätzliche Mittel einzusetzen um die Heizfolie an dem Innenteil zu halten, wenn beide Teile in die Gießform eingebracht sind und der Gießvorgang abläuft. Darüber hinaus ist es auch nicht notwendig, besondere Gestaltungsvorkehrungen zu treffen, z.B., dass die Heizeinrichtung das Innenteil nicht in vollem Umfange abdeckt bzw. dass eine besondere Gestaltung der Gießform vorgesehen ist, um sicherzustellen, dass die flexible Leiterplatte an dem Innenteil anliegt. Durch das erfindungsgemäße Verfahren entfallen umständliche und arbeitsaufwendige Arbeitsschritte, darüber hinaus kann der Handgriff im Bezug auf seine Funktion optimiert werden.

Es kann zweckmäßig sein, wenn die Heizfolie mit dem Innenteil vernietet oder an dieses geclippt wird. Bei solchen Fällen, bei welchen das Innenteil aus einem thermoplastischen Kunststoff besteht, können beispielsweise integral mit dem Innenteil erzeugte radial sich nach außen erstreckende Vorsprünge, die sich durch korrespondierende Löcher in der Heizfolie hindurch erstrecken, an deren Enden heiß verformt werden, sodass sich diese Enden in Umfangsrichtung über die Ränder der korrespondierenden Löcher in der Heizeinrichtung hinaus erstrecken und auf diese Weise eine Fixierung sowohl in radialer als auch in Umfangsrichtung realisiert ist.

Bei der Verwendung eines temperaturbeständigen Klebers kann auch vorgesehen sein, dass die Heizfolie mit dem Innenteil verklebt ist.

Als Grundmaterial zur Herstellung des Verkleidungselementes kann ein thermoplastischer Elastomer vorgesehen sein, welcher einen ähnlichen optischen und haptischen Eindruck wie das bei herkömmlichen Griffen häufig verwendete Gummi erzeugt. Ein solches thermoplastisches Elastomer hat demgegenüber jedoch bedeutende Vorteile im Bezug auf Verarbeitbarkeit.

Grundsätzlich kann das Innenteil aus einer Vielzahl von Materialien hergestellt sein, wobei es sich jedoch mit Bezug auf Herstellungskosten und -aufwand anbietet, auch hier ein thermoplastisches Material zu verwenden. Insofern kann zweckmäßigerweise der Verfahrensschritt des Herstellens des hohlzylinderartigen Innenteils die Schritte des Bereitstellens einer zugeordneten Spritzgussform und das Einspritzen eines thermoplastischen Materials in die Spritzgussform umfassen.

Je nach Ausführungsform der Heizfolie kann es zweckmäßig sein, vor dem Schritt des Umspritzens des Innenteils ein Anschlusskabel an die Heizfolie anzulöten, damit diese an die Stromversorgung angeschlossen ist. Andererseits ist es aber auch möglich, dass die Heizfolie integral mit einer Anschlussvorrichtung ausgebildet ist und eine Steckerverbindung an die flexible Leiterplatte, beispielsweise durch Crimpen angeschlossen ist.

Es kann zweckmäßig sein, die Heizfolie durch das Bereitstellen eines flexiblen Trägers und dem Anbringen von wenigstens einer Widerstandsbahn auf dem Träger herzustellen. Erfindungsgemäß sind jedoch auch andere Gestaltungen denkbar. Beispielsweise liegt es auch im Rahmen der Erfindung und der Ansprüche, die Widerstandsbahn in dem Träger anzuordnen, oder die Widerstandsbahn als einzelne Fläche an oder in dem Träger auszubilden, sodass die Heizeinrichtung in der Art einer homogenen Flächenheizung gestaltet ist.

Die Erfindung wird im Folgenden durch das Beschreiben einiger Ausführungsformen und durch die Angabe weiterer erfindungsgemäßer Merkmale unter Bezugnahme auf die beiliegenden Zeichnungen beschrieben, wobei
- Fig. 1: in einer perspektivischen Darstellung ein Innenteil eines erfindungsgemäßen Handgriffs,
- Fig. 2: das in Fig. 1 dargestellte Innenteil in einer Stirnseitenansicht,
- Fig. 3: in einer Aufsicht eine Heizeinrichtung für den erfindungsgemäßen Handgriff,
- Fig. 4: das in Fig. 1 gezeigte Innenteil mit teilweise angelegter Heizeinrichtung gemäß Fig. 3,
- Fig. 5: das in Fig. 1 gezeigte Innenteil mit vollständig an- gelegter Heizeinrichtung gemäß Fig. 3,
- Fig. 6: die in Fig. 5 dargestellten Teile nach dem Abplatten der Innenteilzapfen,
- Fig. 7: das in Fig. 1 dargestellte Innenteil mit angegossenem Verkleidungselement,
- Fig. 8: eine weitere Ausführungsform einer Heizeinrichtung und
- Fig. 9: die in Fig. 8 gezeigte Heizeinrichtung, angebracht an einer weiteren Ausführungsform eines Innenteils
zeigt.

Der im Folgenden beschriebene erfindungsgemäße, vorliegend für ein Motorrad gestaltete Handgriff umfasst nur drei miteinander verbundene Teile: ein Innenteil, eine Heizeinrichtung und ein Verkleidungselement. Dabei ist die Heizeinrichtung direkt mit dem Innenteil verbunden ist und liegt nach dem Gießprozess zur Erzeugung des Verkleidungselementes auch formschlüssig an dem Innenteil an, sodass von dem Innenteil Drehmomente bzw. Kräfte auf das Verkleidungselement aufgenommen werden können.

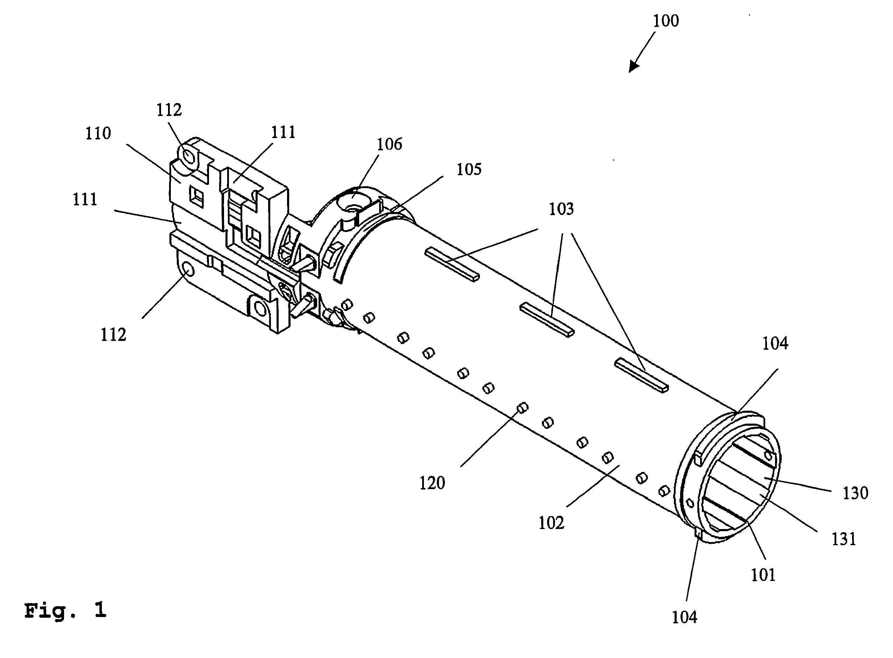

In Fig. 1 ist in einer perspektivischen Darstellung das hohlzylinderförmige Innenteil 100 eines erfindungsgemäßen Handgriffs für ein Motorrad dargestellt. Das Innenteil weist eine ungefähr zylinderförmige innere Mantelfläche 101 und eine im wesentlichen zylinderförmige äußere Mantelfläche 102 auf. Der innere Durchmesser des Innenteils ist so bemessen, dass dieses auf ein nicht dargestelltes Griffrohr des Motorrades aufschiebbar ist, wobei ein solches Griffrohr in der Regel ein Metallrohr ist.

Die innere Mantelfläche 101 ist in sich umfänglich abwechselnde, parallel zur Achse verlaufende Rippen 130 und Ausnehmungen 131 aufgeteilt, welche in dem dargestellten Beispiel eine unterschiedliche umfängliche Breite aufweisen. An dem einen Ende des Innenteils weist dieses an der äußeren Mantelfläche zwei umfänglich beabstandete Querstege 104 auf, deren Zweck unten stehend näher erläutert wird. Im mittleren Bereich der Längserstreckung des Innenteils, der durch zwei im wesentlichen über den gesamten Umfang verlaufende Ringstege 105 mit geringer radialer Höhe festgelegt wird, dient zur Aufnahme der Heizfolie. In diesem Bereich weist die äußere Mantelfläche des Innenteils mehrere längs beabstandete Längsstege 103 auf, die in dem dargestellten Beispiel auf einer gedachten Geraden auf der äußeren Mantelfläche des Innenteils angeordnet sind. Eine solche Anordnung von Längsstegen ist auf zwei weiteren gedachten Geraden auf dem äußeren Umfang des Innenteils vorgesehen und zwar im Uhrzeigersinn auf dem Umfang um 90 bzw. 180° zu der dargestellten Anordnung von Längsstegen versetzt, sodass diese beiden Stegreihen in der perspektivischen Darstellung nicht zu sehen sind. Darüber hinaus weist das Innenteil 100 wiederum auf einer gedachten Linie parallel zur Längsachse auf der äußeren Mantelfläche 102 eine Mehrzahl von Zapfen 120 auf, die sich radial nach außen mit einer vorgegebenen Höhe erstrecken.

Ferner weist das in Fig. 1 dargestellte Innenteil an einem Ende einen ebenen Fortsatz 110 auf mit Löchern 112 zur Befestigung von Betätigungs-/Anschlusselementen und eine Anschlussführung 111 auf. An diesem Ende des Innenteils sind auch zwei, auf dem Umfang um 180° versetzte Löcher 106 angeordnet, die zur Befestigung des Innenteils an dem Griffrohr dienen. Insofern ist das in Fig. 1 gezeigte Innenteil zur Bereitstellung eines Kupplungsgriffs ausgebildet, der relativ zum Griffrohr fixiert und nicht zu diesem drehbar angeordnet ist.

Das Innenteil wird mittels eines bekannten Spritzgießverfahrens aus einem Thermoplast wie Polyamid hergestellt, worauf nicht näher eingegangen werden muss, da dies dem Fachmann bekannt ist.

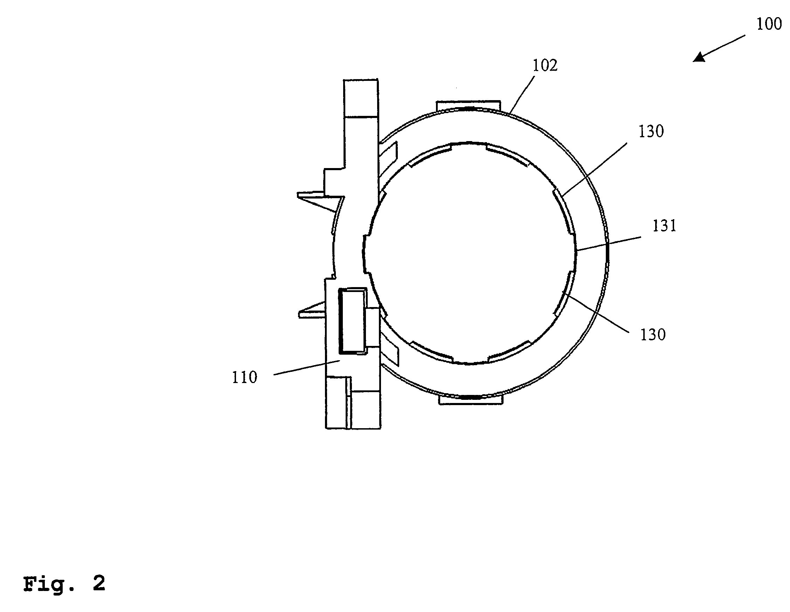

Fig. 2 zeigt das in Fig. 1 dargestellte Innenteil in einer Stirnseitenansicht von der Seite, an welcher der Fortsatz 110 angeordnet ist. Die innere Mantelfläche 101 (siehe Fig. 1) setzt sich aus einer umfänglichen Abfolge von Rippen 130 und Ausnehmungen 131 zusammen, die in Längsrichtung auf der Mantelfläche verlaufen. In der dargestellten Ausführungsform weist die innere Oberfläche 101 acht solcher Rippen 130 auf, die als Zylindermantelflächenabschnitte ausgebildet sind und nach der Montage auf dem Griffrohr aufliegen. Da die Auflagefläche aufgrund der Rippenstruktur vermindert ist, ist der Energieübertrag vom geheizten Innenrohr auf das Griffrohr vermindert.

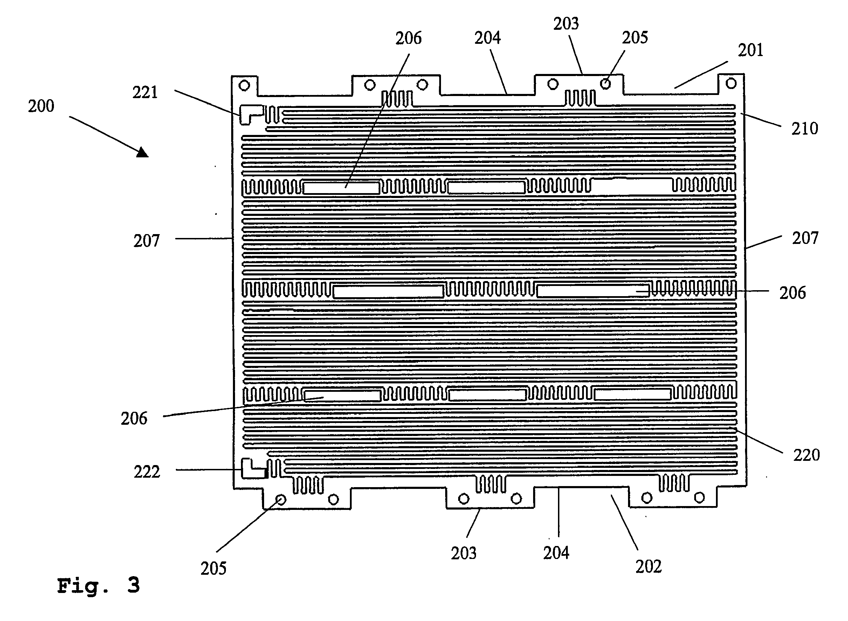

Eine zur Verwendung mit dem in Fig. 1 gezeigten Innenteil ausgebildete Heizeinrichtung 200 zeigt Fig. 3 in einer Aufsicht. Auf einen Träger 210 aus einem hochmolekularen Kunststoff wie Polyimid oder Polyester ist mittels bekannten fotolithografischen Techniken eine Widerstandsbahn 220 mäanderförmig zur Gestaltung der Heizfolie angeordnet. Der Träger 210 ist im Wesentlichen rechteckförmig ausgebildet mit zwei sich gegenüberliegenden Stirnkanten 207 und zwei sich gegenüberliegenden Längskanten 202, 201. Die beiden Längskanten weisen zueinander korrespondierende Zähne 203 bzw. Zahnausnehmungen 204 auf. Im Bereich der Längskanten sind Löcher 205 vorgesehen, darüber hinaus weist der Träger innerhalb der Fläche Schlitze 206 auf. In der Darstellung an der linken Stirnkante sind Lötanschlüsse 221, 222 vorgesehen, die den Anfang bzw. das Ende der durchgehenden, mäanderförmig auf dem Träger 210 angeordneten Widerstandsbahn 220 darstellen. Die Widerstandsbahn umfasst einen elektrischen Leiter mit vorgegebenen spezifischen Widerstand, z.B. Kupfer oder eine Kupferlegierung.

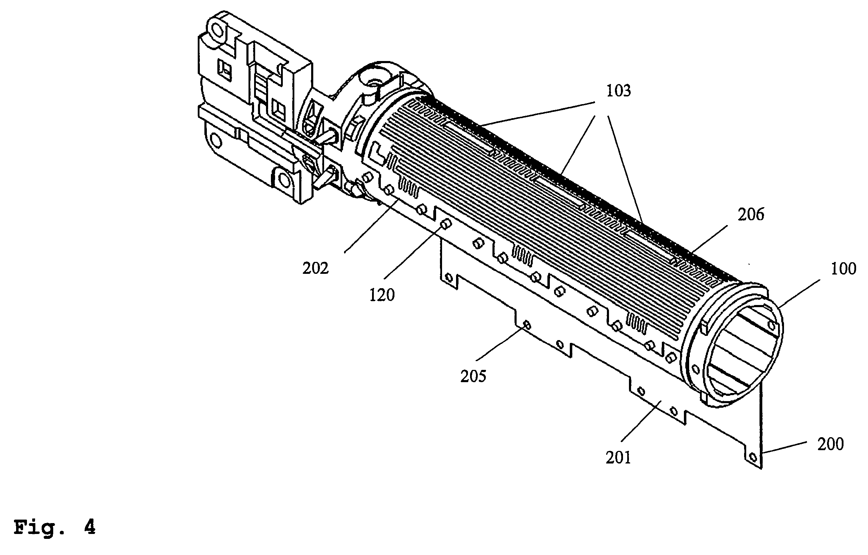

Das Verbinden der in Fig. 3 dargestellten Heizfolie mit dem in Fig. 1 dargestellten Innenteil ist im ersten Schritt in Fig. 4 gezeigt. Dabei werden die Löcher 205 in der Längskante 202 des Trägers zu den Zapfen 120 des Innenteils ausgerichtet und die Zapfen in Eingriff mit den jeweilig korrespondierenden Löchern 205 gebracht. Die Schlitze 206 in der Leiterplatte 200 sind so platziert, dass die Längsstege 103 nach der Ausrichtung der Zapfen 120 zu den entsprechenden Löchern 205 auch mit den Längsschlitzen 206 korrespondieren, sodass die Stege 103 in die Schlitze 206 eingreifen.

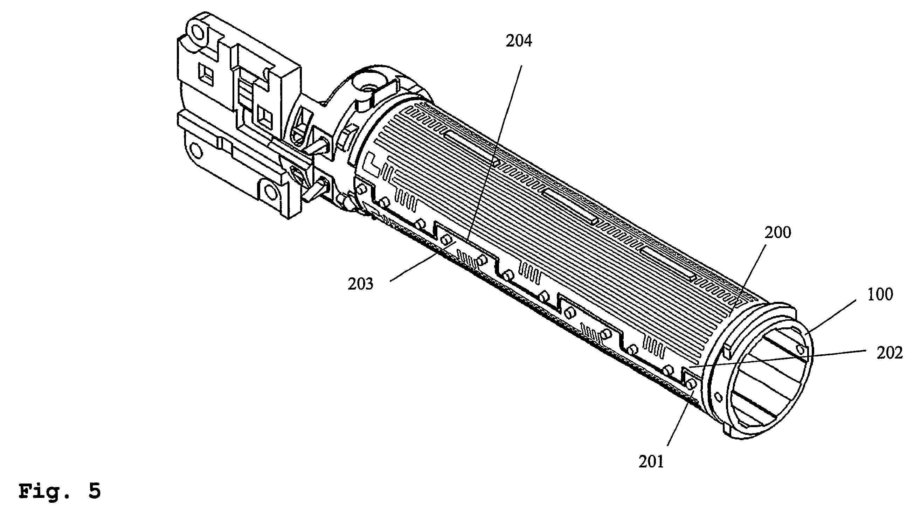

Den nächsten Schritt der Befestigung der Heizeinrichtung 200 an das Innenteil 100 zeigt Fig. 5. Dabei sind auch die Löcher 205 an der anderen Längskante 201 zu den korrespondierenden Zapfen ausgerichtet, sodass ein Zahn 203 einer Längskante 201 der Zahnausnehmung 204 der anderen Längskante 202 gegenüberliegt und in diese eingreift. Die Heizeinrichtung umgreift somit den äußeren Mantel des Innenteils 100 vollständig, ohne dass sich die beiden Längskanten 201, 202 der Heizfolie übergreifen.

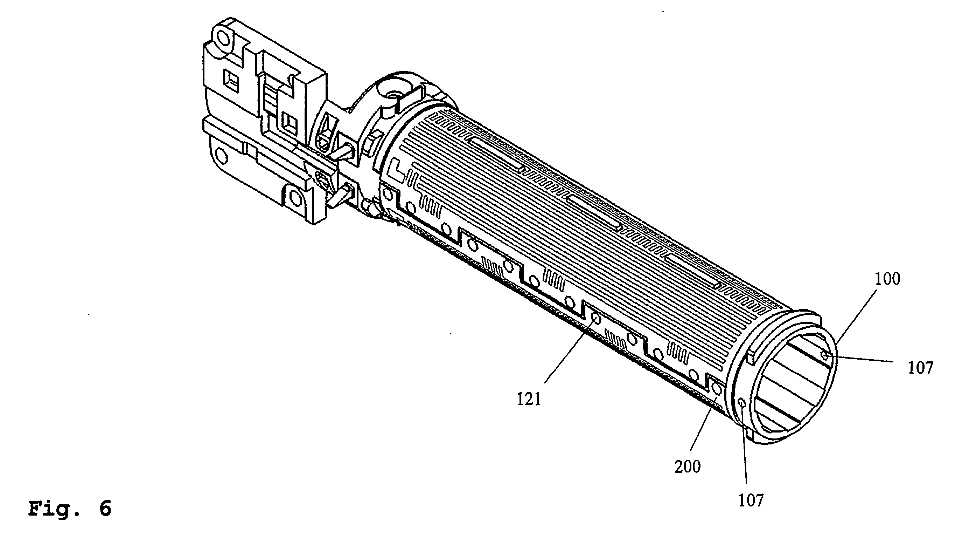

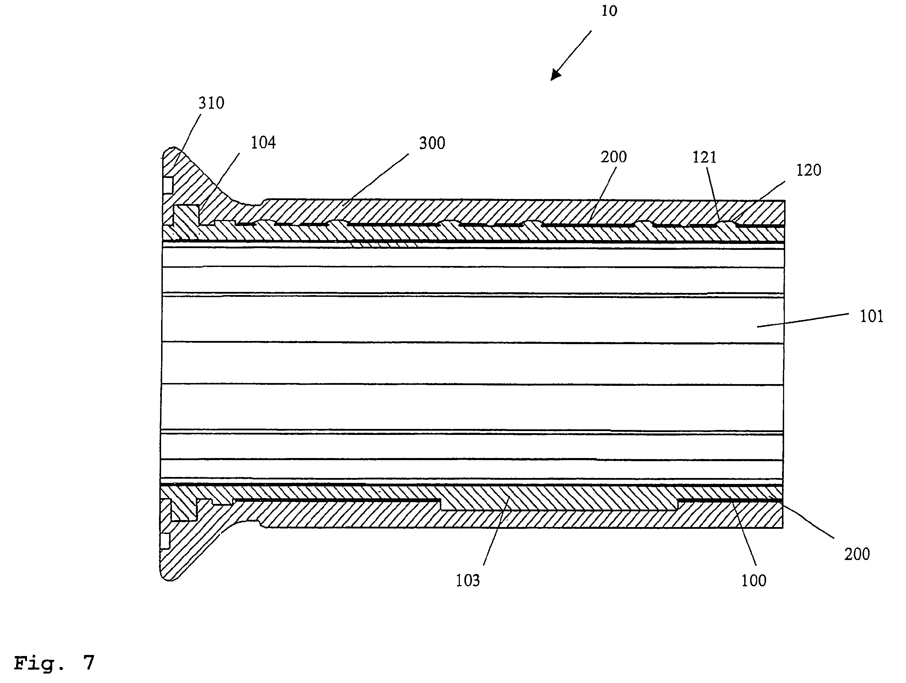

Mit der angegebenen Anordnung von Heizfolie zu dem Innenteil ist sichergestellt, dass beide Teile nicht durch eine Drehbewegung um die Längsachse des Innenteils zueinander verschoben werden können. In einem nachfolgenden Arbeitsschritt werden die Enden der Zapfen 120 durch einen Heißverformungsarbeitsgang "vernietet", bei welchem linsenförmige Köpfe 121 an den Enden der Zapfen erzeugt werden, welche das jeweils korrespondierende Loch 205 (siehe Fig. 6) übergreifen, sodass die Heizfolie sowohl durch Aufbringen einer Kraft oder eines Drehmomentes in Umfangsrichtung als auch beim Auftreten einer Kraft in radialer Richtung nicht von dem Innenteil abgelöst werden kann. Die Heizeinrichtung 200 und das Innenteil sind direkt miteinander verbunden, was wesentlich für den nächsten Arbeitsschritt, d.h. das Umspritzen des in Fig. 6 dargestellten Teils zur Gestaltung eines Verkleidungselementes 300 ist, siehe Fig. 7, die den erfindungsgemäßen Handgriff umfassend die 3 Teile Innenteil 100, Heizeinrichtung 200 und Verkleidungselement 300 in einer Schnittdarstellung zeigt.

Hierzu wird das in Fig. 6 dargestellte Teil in eine entsprechende Spritzgießform eingebracht und das Verkleidungselement 300 zur Fertigstellung des Handgriffs 10 angespritzt. In der beschriebenen Ausführungsform der Erfindung weist hierzu das Innenteil zwei in Figur 1 dargestellte Einspritzöffnungen 107 auf, über welche das Material des Verkleidungselementes vom Innern des Innenteils eingespritzt wird. Wie in der Schnittdarstellung von Fig. 7 gezeigt, ist die innere Manteloberfläche 101 des Innenteils 100 vollkommen frei von Material des Verkleidungselementes. Der Quersteg 104 an der äußeren Mantelfläche des Innenteils ist im Bereich eines Flansches 310 des Verkleidungselementes vollständig vom Material des Verkleidungselementes umgeben, sodass der Quersteg besonders wirksam Kräfte auf das Verkleidungselement aufnehmen kann, die in axialer Richtung verlaufen, beispielsweise beim Aufstellen des Motorrades durch Ziehen an dem Griff.

In Fig. 7 ist die Heizeinrichtung 200 aufgrund ihrer geringen Dicke nur andeutungsweise zu erkennen. Bei dem dargestellten erfindungsgemäßen Handgriff 10 ist die Heizfolie direkt mit dem Innenteil verbunden und das Verkleidungselement liegt aufgrund der vernieteten Zapfen 120 formschlüssig an dem Innenteil an, sodass von dem Innenteil Drehmomente bzw. Kräfte auf das Verkleidungselement aufgenommen werden können. Hierzu tragen die Längs- und Querstege 103, 104 an der äußeren Mantelfläche des Innenteils bei, welche die zugeordneten Momente bzw. Kräfte aufnehmen, wobei sich die Längsstege radial über die Heizeinrichtung 200 erstrecken, siehe Fig. 4.

In einer nicht dargestellten erfindungsgemäßen Ausführungsform sind die Längsstege an der äußeren Mantelfläche des Innenteils, d.h. die radial nach außen verlaufende Erstreckungen ersetzt durch radial nach innen verlaufende Ausnehmungen, wobei diese Ausnehmungen jedoch nicht bis zu der inneren Mantelfläche des Innenteils verlaufen. Somit ist auch sichergestellt, dass sich nach dem Spritzvorgang kein Material des Verkleidungselementes an der inneren Manteloberfläche des Innenteils befindet. Die genannten Ausnehmungen sind wieder korrespondierend zu den Schlitzen 206 der Heizfolie justiert, sodass bei dieser Ausführungsform beim Spritzvorgang zum Anspritzen des Verkleidungselementes Spritzmaterial in die schlitzförmigen Ausnehmungen an der äußeren Mantelfläche des Innenteils eindringt und auf diese Weise eine drehmomentaufnahmefähige Verbindung zwischen dem Verkleidungselement und dem Innenteil bereitgestellt ist. Insofern ist die Wirkung der beschriebenen Längsstege bzw. der Längsausnehmungen an der äußeren Mantelfläche des Innenteils identisch, beide Merkmale entsprechen sich.

Gleiches gilt natürlich auch für den oder die Querstege an dem Innenteil. In einer nicht dargestellten erfindungsgemäßen Ausführungsform sind die Querstege an der äußeren Mantelfläche des Innenteils, d.h. die radial nach außen verlaufende Erstreckungen zumindest teilweise ersetzt durch radial nach innen verlaufende Ausnehmungen oder Nuten. Beim Spritzvorgang zum Anspritzen des Verkleidungselementes dringt wiederum Spritzmaterial in die schlitzförmigen Ausnehmungen an der äußeren Mantelfläche des Innenteils ein wodurch eine kraftaufnehmende Verbindung zwischen dem Verkleidungselement und dem Innenteil bereitgestellt ist. Insofern ist die Wirkung der beschriebenen Querstege bzw. der Querausnehmungen an der äußeren Mantelfläche des Innenteils identisch, beide Merkmale entsprechen sich.

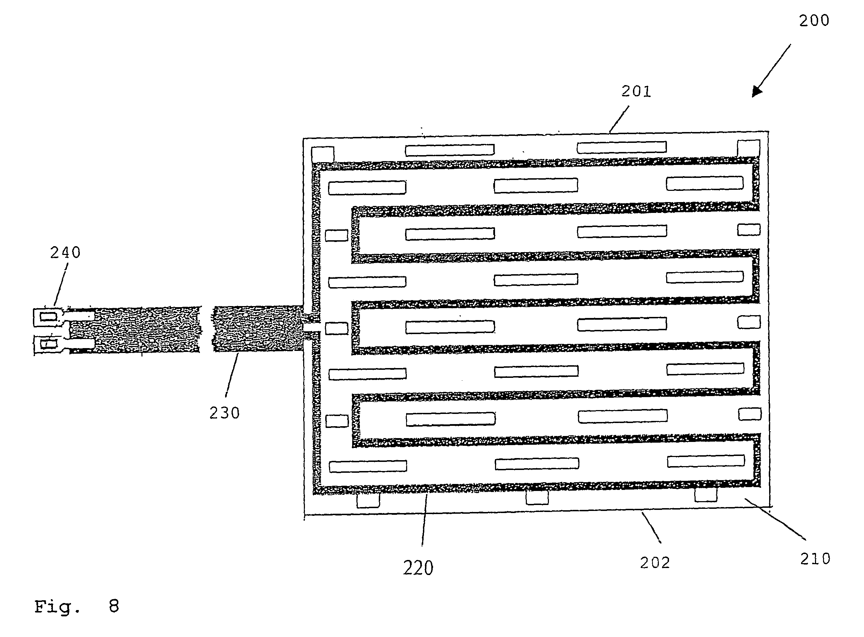

Fig. 8 zeigt eine weitere Ausführungsform einer Heizeinrichtung in Form einer flexiblen Leiterplatte 200, die auf einem Träger 210 basiert. Zum Anschluss der Heizeinrichtung erstreckt sich der Träger 210 zur Gestaltung einer Anschlusseinrichtung 230 über die Längskanten 201, 202 in Form eines schmalen Streifens hinaus. Die nur schematisch dargestellte mäanderförmige Widerstandsbahn 220 geht in der Anschlusseinrichtung 230 in nicht dargestellter Weise in zwei Leiterbahnen über, an deren Enden eine Steckerverbindung angeordnet ist. Diese Steckerverbindung umfasst für jede der Leiterbahnen einen Flachstecker 240, welcher auf den Träger bzw. die Leiterbahn aufgecrimpt ist. Je nach Ausführungsform kann direkt auf der Heizeinrichtung 200 oder auf der Anschlusseinrichtung 230 eine elektronische Steuervorrichtung vorgesehen sein, welche beispielsweise im Ansprechen auf einen im Handgriff angeordneten Temperatursensor den Heizstrom steuert.

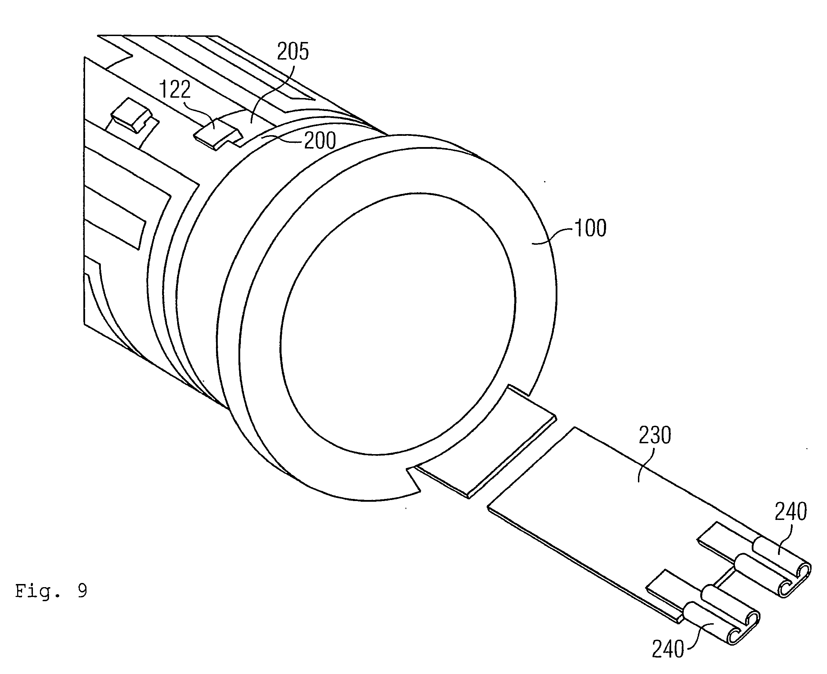

Fig. 9 zeigt die in Fig. 8 dargestellte Heizeinrichtung, welche mit einem zugeordnet ausgebildeten Innenteil 100 verbunden ist. Die Anschlusseinrichtung 230 erstreckt sich über die Längsausdehnung des Innenteils 100 hinaus, wobei die Steckverbindung mit entsprechenden Anschlussmitteln verbunden werden, die an die elektrische Versorgung der Heizeinrichtung angeschlossen sind. Wie zu erkennen, sind die Vorsprünge an der äußeren Mantelfläche des Innenteils nicht zapfenförmig sondern als Halteelement 122 ausgebildet, welche einen rechteckförmigen Querschnitt aufweisen, an die sich in Umfangsrichtung ein quaderförmiger Kopf anschließt. Auch hier übergreift das Halteelement den Rand des korrespondierenden Loches an der Heizeinrichtung. Eine solche Gestaltung des Haltelementes bietet sich dann an, wenn der Träger bzw. die Folie der Heizeinrichtung elastisch ist und somit das korrespondierende Loch an der Heizeinrichtung über den Kopf des Halteelementes 122 gezogen werden kann, dann die Heizfolie radial nach innen bewegt wird und aufgrund der elastischen Kräfte die Heizfolie zurückschnappt, sodass das Halteelement 122 im Kopfbereich den Rand des korrespondierenden Lochs 205 in der Heizeinrichtung übergreift.

### Bezugszeichenliste

- 10: Handgriff
- 100: Innenteil
- 101: Innere Mantelfläche
- 102: Äußere Mantelfläche
- 103: Längssteg
- 104: Quersteg
- 105: Ringsteg
- 106: Loch
- 107: Einspritzöffnung
- 110: Fortsatz
- 111: Anschlussführung
- 112: Löcher
- 120: Stiftartiger Vorsprung, Zapfen
- 121: Linsenförmiger Kopf
- 122: Halteelement
- 130: Rippe
- 131: Ausnehmung
- 200: Heizeinrichtung, Leiterplatte
- 201, 202: Längskante
- 203: Zahn
- 204: Ausnehmung
- 205: Loch
- 206: Schlitz
- 207: Stirnkante
- 210: Träger
- 220: Widerstandsbahn
- 221, 222: Lötanschluss
- 230: Anschlusseinrichtung
- 240: Steckerverbindung
- 300: Verkleidungselement
- 310: Flansch

## Patentansprüche

1. Handgriff (10) mit einer Heizeinrichtung (200, 201) für Fahrzeuge wie Motorräder, Motorschlitten und dgl. umfassend ein hohlzylinderartiges Innenteil (100), eine außen zum Außenmantel des Innenteils (100) angeordnete Heizeinrichtung (200, 201) mit einem Träger (210) und wenigstens einer Widerstandsbahn (220, 221), sowie ein radial außen angeordnetes, angegossenes oder angespritztes Verkleidungselement (300),wobei die Heizeinrichtung (200, 201) direkt mit dem Innenteil (100) verbunden ist, **dadurch gekennzeichnet, dass** der Träger (210) um das Innenteil (100) herum gewickelt ist, wobei dessen beiden Längskanten in Längsrichtung verzahnt sind, und wobei das Innenteil (100) an der Außenmantelfläche (102) zumindest einen radial nach außen weisenden, sich umfänglich erstreckenden Steg (103, 104) und/oder zumindest eine sich umfänglich erstreckende Nut aufweist.

2. Handgriff (10) nach Anspruch 1, **dadurch gekennzeichnet, dass** der Träger (210) das Innenteil (100) im Wesentlichen vollumfänglich umschließt.

3. Handgriff (10) nach Anspruch 1 oder 2, **dadurch gekennzeichnet, dass** im Bereich der Längserstreckung der Heizeinrichtung (200, 201) die radial innen liegende Manteloberfläche des Innenteils (100) frei von Material des Verkleidungselementes (300) ist.

4. Handgriff (10) nach einem der Ansprüche 1 bis 3, **da** - **durch gekennzeichnet**, **dass** sich das Innenteil (100) mit der Heizeinrichtung (200) um die Längsachse des Handgriffs drehstarr in einem Formschluss befindet.

5. Handgriff (10) nach einem der Ansprüche 1 bis 4, **dadurch gekennzeichnet, dass** der Träger (210) Löcher (205, 206) aufweist, in welche korrespondierende, integral mit dem Innenteil (100) ausgebildete Vorsprünge (103, 120) eingreifen.

6. Handgriff (10) nach Anspruch 5, **dadurch gekennzeichnet, dass** sich die Vorsprünge (120) des Innenteils (100) radial über die Heizeinrichtung (200, 201) erstrecken und mit ihren Enden jeweils das korrespondierende Lochs (205) des Trägers (210) der Heizeinrichtung (200) übergreifen.

7. Handgriff (10) nach einem der Ansprüche 1 bis 6, **dadurch gekennzeichnet, dass** das Innenteil (100) an seinem Außenmantel Ausnehmungen aufweist, welche jeweils korrespondierend mit einem Loch (206) in dem Träger (210) der Heizeinrichtung (200) angeordnet sind.

8. Handgriff (10) nach Anspruch 1, **gekennzeichnet** d u r c h zwei umfänglich beabstandete, am gleichen Längsort des Handgriffs angeordnete, sich umfänglich erstreckende Stege (104).

9. Handgriff (10) nach einem der Ansprüche 1 bis 8, **dadurch gekennzeichnet, dass** an der Innenmantelfläche (101) des Innenteils (100) längs verlaufende und sich radial nach innen erstreckende Rippen (130), insbesondere auf dem Umfang äquidistant beabstandete 4 bis 8 Rippen (130), angeordnet sind.

10. Handgriff (10) nach einem Ansprüche 1 bis 9, **dadurch gekennzeichnet, dass** sich integral an einem Längsende des Innenteils (100) ein im wesentlicher ebener Fortsatz (110) erstreckt, welcher eine Führung für eine Anschlusseinrichtung (230) zur Kontaktierung der Heizeinrichtung (200) mit einer Betriebsversorgung aufweist.

11. Handgriff (10) nach einem Ansprüche 1 bis 10, **dadurch gekennzeichnet, dass** die Heizeinrichtung (200) elektrisch mit einer Anschlusseinrichtung (230) verbunden ist, und die Anschlusseinrichtung (230) integral mit dem Träger (210) ausgebildet ist und zumindest einen Abschnitt des Trägers (210) mit einer Leiterbahn umfasst, die an die zumindest eine Widerstandsbahn (220, 221) angeschlossen ist, wobei an dem der Heizeinrichtung abgewandten Ende der Leiterbahn eine Steckereinrichtung angeordnet ist.

12. Handgriff (10) nach einem Ansprüche 1 bis 11, **dadurch gekennzeichnet, dass** die zumindest eine Widerstandsbahn (220) der Heizeinrichtung (200) mäanderförmig verläuft, wobei die Mäanderarme im Wesentlichen parallel zur Längsachse des Handgriffs angeordnet sind.

13. Handgriff (10) nach einem Ansprüche 1 bis 12, **gekennzeichnet durch** eine am Handgriff angebrachte Steuereinrichtung zur Steuerung der von der Heizeinrichtung (200) abgegebenen Heizleistung.

14. Handgriff (10) nach einem Ansprüche 1 bis 13, **gekennzeichnet durch** einen Temperatursensor, insbesondere einen Temperatursensor der an dem Träger (210) der Heizeinrichtung (200, 201) oder in dem Verkleidungselement (300) angebracht ist.

15. Verfahren zur Herstellung eines Handgriffs (10) mit einer Heizeinrichtung (200) für Fahrzeuge wie Motorräder, Motorschlitten und dgl. mit den Schritten:
- Bereitstellen eines hohlzylinderartigen Innenteils (100), wobei das Innenteil (100) an seiner Außenmantelfläche (102) zumindest einen radial nach außen weisenden, sich umfänglich erstreckenden Steg (103, 104) und/oder zumindest eine sich umfänglich erstreckende Nut aufweist;
- Bereitstellen einer Heizfolie (200) mit in Längsrichtung verzahnten Längskanten;
- Befestigen der Heizfolie an der äußeren Manteloberfläche des Innenteils (100), wobei die Heizfolie um das Innenteil (100) herum gewickelt wird, derart, dass die beiden in Längsrichtung verzahnten Längskanten ineinandergreifen;
- Einbringen des Innenteils (100) mit daran befestigter Heizfolie (200) in eine Spritzgießform;
- Umspritzen des Innenteils (100) mit daran befestigter Heizfolie.

16. Verfahren nach Anspruch 15, **dadurch gekennzeichnet, dass** die Heizfolie (200) an dem Innenteil (100) vernietet und/oder geclippt wird.

17. Verfahren nach Anspruch 15, **dadurch gekennzeichnet, dass** die Heizfolie (200) an dem Innenteil (100) verklebt wird.

18. Verfahren nach Anspruch 15, 16 oder 17, **dadurch gekennzeichnet, dass** als Umspritzmaterial ein thermoplastischer Elastomer verwendet wird.

19. Verfahren nach einem der Ansprüche 15 bis 18, **dadurch gekennzeichnet, dass** das Bereitstellen des hohlzylinderartigen Innenteils (100) die Schritte umfasst:
- Bereitstellen einer zugeordneten Spritzgussform und
- Einspritzen eines thermoplastischen Materials in die Spritzgussform.

20. Verfahren nach einem der Ansprüche 15 bis 19, **dadurch gekennzeichnet, dass** vor dem Schritt des Umspritzens des Innenteils (100) ein Anschlusskabel an die Heizfolie (200) angelötet wird.

21. Verfahren nach einem der Ansprüche 15 bis 20, **dadurch gekennzeichnet, dass** der Schritt des Bereitstellens der Heizfolie (200) die Schritte umfasst:
- Bereitstellen eines flexiblen Trägers (210) und
- Anbringen von wenigstens einer Widerstandsbahn (220) auf dem Träger (210).

## Claims

1. Handle (10) comprising a heating system (200, 201) for vehicles such as motorcycles, snowmobiles and the like, said handle comprising a hollow-cylindrical inner part (100), a heating system (200, 201) arranged on the outside with respect to the outer lateral surface of the inner part (100) and having a substrate (210) and at least one strip resistor (220, 221), and a covering element (300) arranged on the radial outside and fixed by molding or injection molding, the heating system (200, 201) being directly connected to the inner part (100), **characterized in that** the substrate (210) is wound about the inner part (100), the two longitudinal edges thereof being toothed in the longitudinal direction, and the inner part (100) being provided on the outer lateral surface (102) with at least one circumferentially extending, radially outwardly directed web (103, 104) and/or with at least one circumferentially extending groove.

2. Handle (10) according to claim 1, **characterized in that** the substrate (210) circumferentially surrounds the inner part (100) substantially completely.

3. Handle (10) according to claim 1 or 2, **characterized in that** the radially inner lateral surface of the inner part (100) is free from material of the covering element (300) in the region of the longitudinal extent of the heating system (200, 201).

4. Handle (10) according to one of the claims 1 to 3, **characterized in that** the inner part (100) is positively connected to the heating system (200) in a manner stiff against rotation about the longitudinal axis.

5. Handle (10) according to one of the claims 1 to 4, **characterized in that** the substrate (210) has holes (205, 206) that are engaged by corresponding protrusions (103, 120) formed integrally with the inner part (100).

6. Handle (10) according to claim 5, **characterized in that** the protrusions (120) of the inner part (100) extend radially over the heating system (200, 201) and respectively overlap the corresponding hole (205) of the substrate (210) of the heating system (200) with the ends thereof.

7. Handle (10) according to one of the claims 1 to 6, **characterized in that** the inner part (100) includes on its outer lateral surface recesses that are respectively arranged in a manner so as to correspond with a hole (206) in the substrate (210) of the heating system (200).

8. Handle (10) according to claim 1, **characterized by** two circumferentially spaced, circumferentially extending webs (104) arranged at the same longitudinal location of the handle.

9. Handle (10) according to one of the claims 1 to 8, **characterized in that** on the inner lateral surface (101) of the inner part (100) there are arranged longitudinally running and radially inwardly extending ribs (130), particularly a number of 4 to 8 ribs (130) equidistantly distributed on the circumference.

10. Handle (10) according to one of the claims 1 to 9, **characterized in that** a substantially plane appendix (110) extends integrally on one longitudinal end of the inner part (100) and includes a guide means for a connecting device (230) for contacting the heating system (200) with an operation supply.

11. Handle (10) according to one of the claims 1 to 10, **characterized in that** the heating system (200) is electrically connected to a connecting device (230) and the connecting device (230) is formed integrally with the substrate (210) and comprises at least one section of the substrate with a strip conductor, which is connected to at least one strip resistor (220, 221), a plug means being provided on the end of the strip conductor which faces away from the heating system.

12. Handle (10) according to one of the claims 1 to 11, **characterized in that** the at least one strip resistor (220) of the heating system (200) extends in a meandering fashion, with the arms of the meander being arranged parallel to the longitudinal axis of the handle.

13. Handle (10) according one of the claims 1 to 12, **characterized by** a control device attached to the handle for controlling the calorific output of the heating system (200).

14. Handle (10) according to one of the claims 1 to 13, **characterized by** a temperature sensor, particularly a temperature sensor which is mounted to the substrate (210) of the heating system (200, 201) or in the covering element (300).

15. Method for manufacturing a handle (10) comprising a heating system (200) for vehicles such as motorcycles, snowmobiles and the like, comprising the steps of:
- providing a hollow-cylindrical inner part (100), said inner part (100) having on the outer lateral surface (102) thereof at least one radially outwardly directed, circumferentially extending web (103, 104) and/or at least one circumferentially extending groove;
- providing a heating film (200) with longitudinal edges that are toothed in the longitudinal direction;
- fixing the heating film to the outer lateral surface of the inner part (100), wherein the heating film is wrapped around the inner part (100) in such a manner that said two longitudinal edges which are toothed in the longitudinal direction mesh with each other;
- placing the inner part (100) with the heating film (200) fixed to it in an injection mold;
- extrusion-coating of the inner part (100) with the heating film fixed to it.

16. Method according to claim 15, **characterized in that** the heating film (200) is riveted and/or clipped to the inner part (100).

17. Method according to claim 15, **characterized in that** the heating film (200) is bonded to the inner part (100).

18. Method according to claim 15, 16 or 17, **characterized in that** a thermoplastic elastomer is used as an extrusion-coating material.

19. Method according to one of the claims 15 to 18, **characterized in that** the provision of the hollow-cylindrical inner part (100) comprises the steps of :
- providing an associated injection mold and
- injecting a thermoplastic material into the injection mold.

20. Method according to one of the claims 15 to 19, **characterized in that** a connection cable is soldered to the heating film (200) prior to the step of extrusion-coating of the inner part (100).

21. Method according to one of the claims 15 to 20, **characterized in that** the step of providing the heating film (200) comprises the steps of:
- providing a flexible substrate (210) and
- attaching at least one strip resistor (220) to the substrate (210).

## Revendications

1. Poignée (10) à dispositif chauffant (200, 201) destinée à des véhicules comme des motocycles, motoneiges et d'autres choses semblables, ladite poignée comprenant un élément intérieur (100) en forme de cylindre creux, un dispositif chauffant (200, 201) arrangé extérieurement par rapport à la surface latérale extérieure de l'élément intérieur (100) et ayant un support (210) et au moins une piste résistante (220, 221), ainsi qu'un élément de revêtement (300) arrangé radialement à l'extérieur de façon intégrée par moulage ou extrusion, ledit dispositif chauffant (200, 201) étant relié directement à l'élément intérieur (100), **caractérisée en ce que** le support (210) est entortillé autour de l'élément intérieur (100), ses deux arêtes longitudinales étant dentées dans la direction longitudinale, et au moins l'élément intérieur (100) comportant sur la surface latérale extérieure (102) au moins une âme (103, 104) montrant vers l'extérieur et s'étendant de manière circonférentielle et/ou au moins une rainure s'étendant de manière circonférentielle.

2. Poignée (10) selon la revendication 1, **caractérisée en ce que** l'élément intérieur (100) est entouré du support (210) essentiellement sur sa circonférence complète.

3. Poignée (10) selon la revendication 1 ou 2, **caractérisée en ce que** dans la région de l'étendue longitudinale du dispositif chauffant (200, 201) la surface latérale et radialement intérieure de l'élément intérieur (100) est exempt de matériel de l'élément de revêtement (300).

4. Poignée (10) selon l'une des revendications 1 à 3, **caractérisée en ce que** l'élément intérieur (100) est engagé avec le dispositif chauffant (200) de manière positive et rigide en rotation autour de l'axe de la poignée.

5. Poignée (10) selon l'une des revendications 1 à 4, **caractérisée en ce que** le support (210) comporte des trous (205, 206) dans lesquels engagent des projectures (103, 120) correspondantes formées de manière intégrale avec l'élément intérieur (100).

6. Poignée (10) selon la revendication 5, **caractérisée en ce que** les projectures (120) de l'élément intérieur (100) s'étendent radialement sur le dispositif chauffant (200, 201) et respectivement chevauchent le trou (205) correspondant du support (210) du dispositif chauffant (200) par ses extrémités.

7. Poignée (10) selon l'une des revendications 1 à 6, **caractérisée en ce que** l'élément intérieur (100) comporte sur sa surface latérale extérieure des creux qui sont respectivement disposés de sorte qu'ils correspondent avec un trou (206) dans le support (210) du dispositif chauffant (200).

8. Poignée (10) selon la revendication 1, **caractérisée par** deux âmes (104) s'étendant dans la direction périphérique qui sont disposées au même lieu longitudinal de la poignée et sont écartées dans la direction périphérique.

9. Poignée (10) selon l'une des revendications 1 à 8, **caractérisée en ce que** des nervures longitudinales (130) s'étendant radialement vers l'intérieur et en particulier un nombre de 4 à 8 nervures (130) réparties de manière équidistante sur la périphérie sont arrangées sur la surface latérale intérieure (101) de l'élément intérieur (100).

10. Poignée (10) selon l'une des revendications 1 à 9, **caractérisée en ce qu'**un appendice (110) essentiellement plan s'étend de manière intégrale à une extrémité longitudinale de l'élément intérieur (100), ledit appendice comportant un moyen de guidage pour un dispositif de connexion (230) pour établir un contact du dispositif chauffant (200) avec une alimentation de marche.

11. Poignée (10) selon l'une des revendications 1 à 10, **caractérisée en ce que** le dispositif chauffant (200) est connecté de manière électrique avec un dispositif de connexion (230) et **en ce que** le dispositif de connexion (230) fait corps avec le support (210) et comporte au moins une section du support (210) avec une piste conductrice qui est raccordée à l'au moins une piste résistante (220, 221), avec un dispositif de connecteur étant arrangé à l'extrémité de la piste conductrice éloignée du dispositif chauffant.

12. Poignée (10) selon l'une des revendications 1 à 11, **caractérisée en ce que** l'au moins une piste conductrice (220) du dispositif chauffant (200) s'étend en forme de méandre, les bras du méandre étant disposés essentiellement parallèlement à l'axe longitudinal de la poignée.

13. Poignée (10) selon l'une des revendications 1 à 12, **caractérisée par** un dispositif de contrôle fixé à la poignée pour contrôler la puissance calorifique fournie du dispositif chauffant (200).

14. Poignée (10) selon l'une des revendications 1 à 13, **caractérisée par** un capteur de température, notamment un capteur de température monté sur le support (210) du dispositif chauffant (200, 201) ou dans l'élément de revêtement (300).

15. Procédé de fabrication d'une poignée (10) à dispositif chauffant (200, 201) destinée à des véhicules comme des motocycles, motoneiges et autres choses semblables, le procédé comportant les étapes suivantes :
- la mise en disposition d'un élément intérieur (100) en forme de cylindre creux, ledit élément intérieur (100) ayant sur sa surface latérale extérieure (102) au moins une âme (103, 104) montrant vers l'extérieur et s'étendant de manière circonférentielle et/ou au moins une rainure s'étendant de manière circonférentielle ;
- la mise en disposition d'un film chauffant (200) avec des arêtes dentées dans la direction longitudinale ;
- la fixation du film chauffant sur la surface latérale extérieure de l'élément intérieur (100), le film chauffant étant entortillé autour de l'élément intérieur (100) de telle manière que les deux arêtes longitudinales dentées dans la direction longitudinale engagent l'une dans l'autre ;
- la mise en place de l'élément intérieur (100) avec le film chauffant (200) y fixé dans une matrice d'extrusion ;
- couvrir par extrusion l'élément intérieur (100) avec le film chauffant y fixé.

16. Procédé selon la revendication 15, **caractérisé en ce que** le film chauffant (200) est fixé sur l'élément intérieur en utilisant des rivets et/ou clips.

17. Procédé selon la revendication 15, **caractérisé en ce que** le film chauffant (200) est collé à l'élément intérieur (100).

18. Procédé selon la revendication 15, 16 ou 17, **caractérisé en ce qu'**un élastomère thermoplastique est utilisé comme matériel pour l'extrusion.

19. Procédé selon l'une des revendications 15 à 18, **caractérisé en ce que** la mise en disposition de l'élément intérieur (100) en forme de cylindre creux comporte les étapes suivantes :
- la mise en disposition d'une matrice d'extrusion associée et
- l'injection d'un matériel thermoplastique dans la matrice d'extrusion.

20. Procédé selon l'une des revendications 15 à 19, **caractérisé en ce qu'**un câble de raccordement est fixé au film chauffant (200) par soudage avant l'étape de l'extrusion de l'élément intérieur (100).

21. Procédé selon l'une des revendications 15 à 20, **caractérisé en ce que** l'étape de mise en disposition du film chauffant (200) comporte les étapes suivantes:
- la mise en disposition d'un support flexible (210) et
- la mise d'au moins une piste résistante (220) sur le support (210).
